# NEUE EUROPÄISCHE PATENTSCHRIFT

(11) **EP 1 830 149 B2**
(45) Veröffentlichungstag und Bekanntmachung des Hinweises auf die Entscheidung über den Einspruch: **20.11.2013**
(45) Hinweis auf die Patenterteilung: 18.03.2009
(21) Anmeldenummer: 06025349.9
(22) Anmeldetag: 07.12.2006
(51) Int. Cl.: F28D 9/00

(54) **Verfahren zur Bestimmung der Festigkeit eines Plattenwärmeaustauschers, zur Herstellung eines Plattenwärmeaustauschers und zur Herstellung einer verfahrenstechnischen Anlage**
Process for detemining the rigidity of a plate heat exchanger and process for producing the plate heat exchanger
Procédé de détermination de la rigidité d'un échangeur de chaleur à plaques et procédé pour leur fabrication.

(30) Priorität: 13.12.2005 DE 102005059993; 23.03.2006 EP 06006033
(43) Veröffentlichungstag der Anmeldung: 05.09.2007
(73) Patentinhaber: Linde AG, 80331 München (DE)
(72) Erfinder: Hölzl, Reinhold, Dr., 82538 Geretsried (DE)
(74) Vertreter: Imhof, Dietmar

(56) Entgegenhaltungen:
- FR-A1- 2 793 701

## Beschreibung

### Technisches Gebiet

Die vorliegende Erfindung bezieht sich auf ein Verfahren zur Bestimmung der Festigkeit eines Plattenwärmetauschers, ein Verfahren zur Herstellung eines Plattenwärmetauschers und ein Verfahren zur Herstellung einer verfahrenstechnischen Anlage.

### Stand der Technik

Plattenwärmetauscher sind in zahlreichen Ausführungsformen bekannt. Grundsätzlich sind Plattenwärmetauscher dazu ausgelegt, einen Wärmeaustausch zwischen hindurchströmenden Fluiden, Gasen oder Flüssigkeiten, zu ermöglichen. Die Fluide bleiben dabei räumlich getrennt, so dass keine Vermischung zwischen diesen auftritt. Die von den Fluiden ausgetauschten Wärmemengen strömen also durch die die Fluide trennenden Strukturen des Plattenwärmetauschers. Ein "Plattenwärmetauscher" im Sinne dieser Anmeldung kann aus einem Plattenwärmetauscherblock oder aus mehreren Plattenwärmetauscherblöcken bestehen.

Ein Plattenwärmetauscher weist eine Mehrzahl Passagen auf, durch die die Fluide strömen können. Eine Passage umfasst dabei Wärmeaustauschprofile, sog. Fins, durch die bzw. entlang denen das jeweilige Fluid strömt, und zwar üblicherweise entlang von Rippen. Wärmeaustauschprofile können recht unterschiedlich geformt sein und komplexe Geometrien aufweisen. Die Passagen sind durch Trennbleche voneinander getrennt.

Ein Verfahren zur Herstellung eines Plattenwärmetauschers kann beispielsweise folgende Schritte umfassen: Aufbringen eines Lots auf die Flächen der Trennbleche, abwechselndes Aufeinanderstapeln von Trennbleche und Profilen bzw. gegebenenfalls weiterer innerhalb einer Passage vorhandener Strukturen und Verlöten der Profile mit den Trennblechen. Das Verlöten kann etwa in einem den Plattenwärmetauscher umfassenden Ofen geschehen.

Insbesondere kann die Herstellung eines Plattenwärmetauschers auch eine Simulation seines Betriebes umfassen. Dies ist sowohl in der Entwicklung im Vorfeld der eigentlichen Produktion, als auch produktionsbegleitend sinnvoll. Im ersten Fall kann die Kenntnis der Ergebnisse einer solchen Simulation den Entwurf beeinflussen, im zweiten Fall können noch anpassende Maßnahmen oder auch nur Kontrollen durchgeführt werden. Die Simulation bereits existierender Plattenwärmetauscher ermöglicht eine Verbesserung der Beurteilung existierender Konstruktionen, etwa bzgl. ihres Ausfallrisikos.

Aufgrund der innerhalb eines Plattenwärmetauschers ausgetauschten Wärmemengen weisen die den Plattenwärmetauscher durchströmenden Fluide eine räumliche und zeitlich veränderliche Temperaturverteilung auf. Eine genäherte Bestimmung einer Temperaturverteilung entlang der Strömungsrichtung eines eine Passage durchströmenden Fluids anhand von zweidimensionalen Computersimulationen ist bekannt. Dies gilt auch für die Verteilung des Wärmeübergangskoeffizienten. Dieser Punkt ist in der folgenden Beschreibungseinleitung und in dem Ausführungsbeispiel etwas detaillierter ausgeführt.

In den Dokumenten "Evaluation of fatigue strength of plate-fin heat exchanger under thermal loading", Nakaoka et al, International Conference on Pressure Vessel Technology, Volume 1, ASME 1996, "Fatigue strength of corrugated fin type heat exchanger", Mizoguchi et al, ASME, Pressure Vessel & Piping, 1982 und "Threedimensional structural analysis of the plate-fin heat exchanger", Nakagawa et al, ASME, Pressure Vessel and Piping, 1984 werden Verfahren zur dreidimensionalen numerischen Simulation des Betriebs eines Plattenwärmetauschers dargestellt.

### Darstellung der Erfindung

Der vorliegenden Erfindung liegt das technische Problem zu Grunde, ein vorteilhaftes Verfahren zur Bestimmung der Festigkeit eines Plattenwärmetauschers, ein vorteilhaftes Herstellungsverfahren für einen Plattenwärmetauscher und ein vorteilhaftes Verfahren zur Herstellung einer verfahrenstechnischen Anlage anzugeben.

Dieses Problem wird durch das Verfahren zur Bestimmung der Festigkeit eines Plattenwärmetauschers Patentanspruchs 1 gelöst. Dieses Verfahren kann zum Beispiel zur Bestimmung der Festigkeit eines existierenden Plattenwärmetauschers eingesetzt werden. Bei der Simulation werden vorzugsweise zusätzlich zu den Temperaturspannungen auch die Druckspannungen des Plattenwärmetauschers berechnet, wobei auch die berechneten Druckspannungen in die Bestimmung der Festigkeit einfließen. Simuliert werden die Spannungen während des Betriebs des Plattenwärmetauschers, also mindestens in einem Betriebsfall. Betriebsfälle sind beispielsweise der stationäre Betrieb, ein Betrieb unter Sonderbedingungen, Unterlastbetrieb oder allgemein Betriebsfälle unter unterschiedlichen Lastbedingungen, Anfahren oder Abfahren.

Hinsichtlich der Herstellung eines Plattenwärmetauschers wird das Problem durch das Verfahren gemäß Patentanspruch 3 gelöst. Hierbei wird das Verfahren nach Anspruch 1 zur Auslegung (Design) eines noch nicht existierenden Plattenwärmetauschers eingesetzt. Die dreidimensionale Simulation ist Teil der Auslegung, mit deren Hilfe die mechanischen Parameter für die anschließende Fertigung des Plattenwärmetauschers bestimmt werden.

Bei den mechanischen Parametern, die durch Simulation festgelegt werden, kann es sich zum Beispiel um einen oder mehrere der folgenden Größen handeln:
- Geometrie der Trennwände (Trennbleche), insbesondere ihre Dicke
- Geometrie der Profile (Fins), insbesondere ihre Höhe, Teilung und/oder Materialdicke
- Fintyp, der als Profil verwendet wird: glatt, perforiert, geschnitten, Fischgrätmuster etc. (plain, perforated, serrated, heringbone gemäß ALPEMA Standard 2000, Seite 8)
- Zahl, Geometrie und Anordnung von Leerpassagen
- Zahl und Anordnung von Modulen (ein "Modul" stellt einen Teil, zum Beispiel einen Block, des Wärmetauschers dar, der an einem Stück vorgefertigt wird, zum Beispiel durch Löten, und der mit einem oder mehreren weiteren Modulen zu dem Plattenwärmetauscher zusammengesetzt wird)

Bezüglich zur Herstellung einer verfahrenstechnischen Anlage wird das oben genannte Problem in einer ersten Variante durch das Verfahren gemäß Anspruch 4 gelöst. Hier wird das Verfahren gemäß Anspruch 1 auf einen bereits existierenden Plattenwärmetauscher angewendet. Falls der bestimmte Wert für die Festigkeit nicht für die Anforderungen der verfahrenstechnischen Anlage ausreicht, wird der entsprechende Plattenwärmetauscher dort nicht eingesetzt oder die Anlage beziehungsweise deren Betriebsweise wird modifiziert. Eine Modifizierung der Anlage kann beispielsweise in der Hinzufügung einer oder mehrerer Leitungen, einer oder mehrerer Absperrungen, eines oder mehrerer Ventile oder Ähnlichem bestehen.

Eine zweite Variante des erfindungsgemäßen Verfahrens zur Herstellung einer verfahrenstechnischen Anlage ist in Anspruch 5 beschrieben. Hier wird der Plattenwärmetauscher zunächst mit konventionellen Mitteln (das heißt insbesondere ohne dreidimensionale Simulation der Temperaturspannungen) ausgelegt und der komplett berechnete, aber noch nicht gefertigte Wärmetauscher einer dreidimensionalen Simulation zur Bestimmung der Festigung gemäß Anspruch 1 unterzogen. Ergibt sich eine ausreichende Festigkeit, wird der Plattenwärmetauscher entsprechend gefertigt und in die verfahrenstechnische Anlage eingebaut; falls nicht, wird die Auslegung geändert und die Simulation ein weiteres Mal durchgeführt. Dies wird so lange wiederholt, bis eine ausreichende Festigkeit erreicht worden ist.

Bevorzugte Ausgestaltungen der Erfindung sind in den abhängigen Ansprüchen angegeben und werden im Folgenden näher erläutert.

Der Erfinder hat festgestellt, dass eine detaillierte Simulation der räumlichen Temperaturverteilung im Material eines Plattenwärmetauschers, welche insbesondere die Geometrie der Profile beachtet, aufgrund der Größe und Komplexität des Systems nicht immer praktikabel ist. Auch unter Zuhilfenahme schneller Rechner ist die Rechenzeit zur Durchführung einer detaillierten Simulation ein in der Praxis ernsthaft entgegenstehendes Hindernis.

Das bei der Erfindung vorzugsweise verwendete Simulationsverfahren basiert auf der Erkenntnis, dass die Temperaturverteilung in dem Material des Plattenwärmetauschers maßgeblich durch die durch den Plattenwärmetauscher fließenden Wärmeströme bestimmt ist und zur Bestimmung einer hinreichend exakten Temperaturverteilung nicht die volle geometrische Komplexität eines realen Plattenwärmetauschers berücksichtigt werden muss.

Gerade die Profile können eine recht komplexe Geometrie aufweisen.

Im Rahmen einer Weiterentwicklung des Erfindungsgedankens wird anstatt eines detaillierten Modells einer Passage eines Plattenwärmetauschers, bei dem sich ein komplex geformtes Profil zwischen zwei Trennblechen befindet, ein vereinfachendes Schichtmodell verwendet. In diesem Schichtmodell wird das Profil durch einen den Raum zwischen den Trennblechen homogen ausfüllenden Metallblock modelliert.

Durch diese Maßnahme wird auf die Beachtung der realen Struktur des Profils verzichtet. Der Metallblock liegt direkt an einem der Trennbleche an bzw. befindet sich zwischen zwei Trennblechen, welche die modellierte Passage umschließen. Es kann sich allerdings auch auf der einen Seite des Metallblocks ein Trennblech und auf der anderen eine Abdeckung des Plattenwärmetauschers befinden. Zur sprachlichen Vereinfachung wird hier nur der Fall, dass der Metallblock von zwei Trennblechen umgeben ist, explizit beschrieben.

Das reale Profil ist mit seinen es umfassenden Trennblechen verlötet. Diese Verbindung ist üblicherweise sehr gut wärmeleitend. Daher befindet sich der Metallblock in dem Schichtmodell mit dem an ihm anliegenden Trennblechen auch in einem wärmeleitfähigen Kontakt, allerdings aus Gründen der geometrischen Vereinfachung über die gesamte Kontaktebene.

In einem einfachen Fall wird das Schichtmodell also eine "Elementarzelle" mit zwei Trennblechen und einem dazwischen befindlichen Metallblock aufweisen. Größere Teile eines Plattenwärmetauschers lassen sich durch eine Aneinanderreihung bzw. Stapelung vieler Elementarzellen simulieren.

Das Schichtmodell muss dabei nicht das Fluid als solches umfassen, sondern nur dessen Beitrag zum Wärmeeintrag in den Plattenwärmetauscher.

Der Einfachheit halber wird hier lediglich von einem Wärmeeintrag von dem Fluid in das Material des Plattenwärmetauschers gesprochen, genauso gut kann allerdings auch ein Wärmeeintrag von dem Material des Plattenwärmetauschers in das Fluid hinein erfolgen. Es sind jeweils immer beide Möglichkeiten gemeint, wenn nichts anderes explizit klargestellt ist.

In einem realen Plattenwärmetauscher können zwei Möglichkeiten zum Einbringen von Wärme aus dem Fluid in den Plattenwärmetauscher unterschieden werden: Ein erster Wärmeeintrag erfolgt durch Wärmeübergang von dem Fluid in das Profil. Durch Wärmeleitung kann dann ein Wärmeaustausch zwischen den Trennblechen und dem Profil stattfinden. Ein zweiter Wärmeeintrag von dem Fluid in das Material des Plattenwärmetauschers kann bei vielen Profilen durch direkten Wärmeübergang von dem Fluid in die Trennbleche erfolgen.

In dem Schichtmodell kann der erste Wärmeeintrag auch dem Gesamtwärmeeintrag entsprechen und die erste Wärmemenge in eine erste Fläche innerhalb des Metallblocks eingebracht werden. Diese Fläche liegt parallel zu den Trennblechen. Ausgehend von dieser Fläche wird die Wärme durch den Metallblock in die Trennbleche geleitet (Wärmeleitung). Basis für ein entsprechendes Modell ist der entlang der Strömungsrichtung des Fluids in einer Passage bereits bekannte Wärmeübergangskoeffizient, welcher den Übergang des Gesamtwärmeeintrages in den Plattenwärmetauscher quantifiziert.

In einem realen Plattenwärmetauscher legt die durch das Profil strömende Wärme je nach Position des erfolgten Wärmeüberganges unterschiedlich lange Wege bis zu den Trennblechen zurück.

In dem Schichtmodell entscheidet man sich für einen bestimmten Abstand zwischen der in dem Metallblock liegenden Fläche und den Trennblechen. Dieser Abstand fasst effektiv die unterschiedlichen Weglängen innerhalb eines realen Profils zusammen. Beispielsweise kann als Abstand zwischen der in dem Metallblock liegenden Fläche und den Trennblechen die mittlere zurückzulegende Wärmeleitungslänge gewählt oder auch die Wärmeleitfähigkeit des Metallblocks angepasst werden.

Dies eröffnet auch eine einfache Möglichkeit den direkten Wärmeübergang von dem Fluid in die Trennbleche ohne separat berücksichtigten Wärmeeintrag zu berücksichtigen. Den entsprechenden Bereichen des Plattenwärmetauschers wird eine Wärmeleitungslänge von Null zugewiesen. Dies lässt sich einfach in dem Abstand zwischen der in dem Metallblock liegenden Fläche und den Trennblechen in dem Schichtmodell berücksichtigen.

Das Schichtmodell weist verschiedene Korrekturfaktoren zur Anpassung seiner Eigenschaften auf, um es trotz der im Vergleich zum realen Plattenwärmetauscher stark reduzierten geometrischen Komplexität an reale Gegebenheiten anpassen zu können.

Vorzugsweise wird eine dem zweiten Wärmeeintrag entsprechende Wärmemenge in eine zweite Fläche in der Kontaktebene zwischen dem Metallblock und dem Trennblech eingebracht. Der Gesamtwärmeeintrag wird also zwischen dem ersten und dem zweiten Wärmeeintrag aufgeteilt und der zweite Wärmeeintrag explizit mit modelliert.

Die in die Flächen eingebrachten Wärmemengen modellieren den ersten und den zweiten Wärmeeintrag. D. h. jedoch nicht, dass in dem Schichtmodell die in die erste Fläche eingebrachte Wärmemenge nun genau der Wärmemenge, die das Fluid in das Profil einbringt, entsprechen muss. Das Gleiche gilt entsprechend für die in die zweite Fläche eingebrachte Wärmemenge. Die beiden Wärmeeinträge werden anhand eines Modells zur Wärmeeintragsaufteilung aufgeteilt.

Ein einfaches Modell ist beispielsweise, die gesamte Wärmemenge einfach zu gleichen Teilen auf die erste und die zweite Fläche zu verteilen, was noch näher erläutert wird.

Vorzugsweise wird der Wärmeübergangskoeffizient für den Wärmeübergang zwischen dem Fluid und dem Plattenwärmetauscher mit einem den Wärmeeintrag korrigierenden Wärmeübergangskorrekturfaktor multipliziert.

Dazu kann der zuvor bestimmte Wärmeübergangskoeffizient durch die Anzahl der Ebenen in dem Schichtmodell, durch die Wärme eingebracht wird, geteilt werden.

Ist etwa der Metallblock des Schichtmodells von zwei Trennblechen umgeben und sind jeweils in die Kontaktebene zwischen dem Metallblock und den Trennblechen eine fiktive Ebene sowie mittig parallel zu den Trennblechen zwei fiktive Ebenen eingebracht, so weist das Schichtmodell insgesamt vier fiktive Flächen auf. Der Wärmeübergangskoeffizient wird in diesem Fall durch vier geteilt. Alternativ ist auch eine Aufteilung in mehr als vier fiktive Flächen möglich.

Die diesem Verfahrensschritt zugrunde liegende Überlegung ist es, den Wärmeübergangskoeffizienten durch die Anzahl der "Wärmequellen" in dem Schichtmodell zu teilen und entsprechend den Gesamtwärmeeintrag auf die fiktiven Flächen zu verteilen.

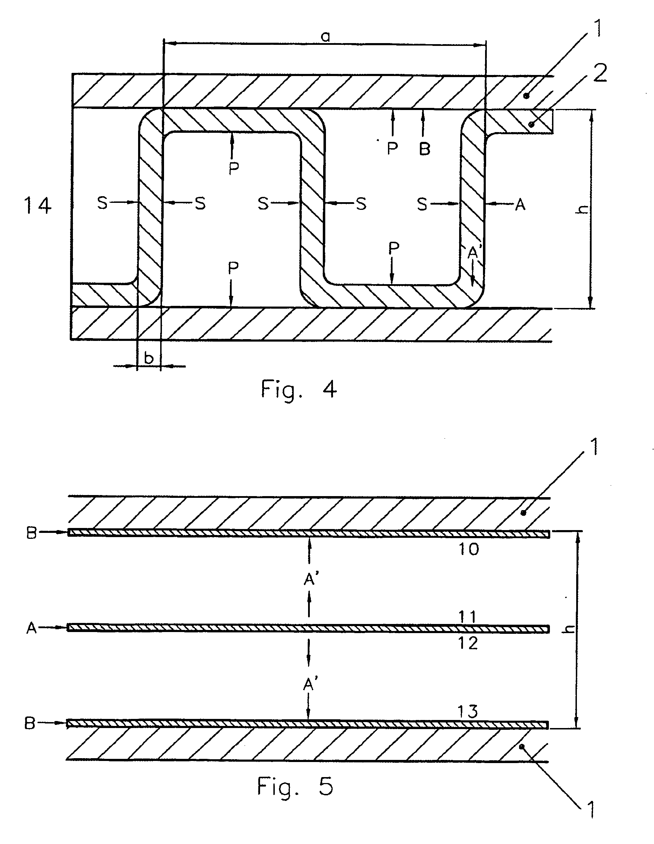

An dieser Stelle kann allerdings auch einfach ein Aspekt der Geometrie eines realen Profils berücksichtigt werden. Der Wärmeübergang von dem Fluid in das Profil findet über sog. sekundäre Flächen statt. Diese entsprechen zwischen den Trennblechen liegenden Flächen der Teile des Profils, welche Teile nicht an einem Trennblech anliegen (s. Figur 4). Der Wärmeübergang von dem Fluid in die Trennbleche geschieht über sog. primäre Flächen. Dies sind Flächen der Trennbleche, die in direktem Kontakt mit dem strömenden Fluid stehen, oder auch solche, an denen das Profil, welches eine im Vergleich zum Durchmesser der Passage geringe Stärke aufweisen kann, anliegt (s. Figur 4).

Je nach der Geometrie des Profils können die sekundären und primären Flächen in einem sehr unterschiedlichen Verhältnis zueinander stehen. Daher können die in die fiktiven Ebenen eingebrachten Wärmemengen entsprechend des Verhältnisses zwischen den sekundären und primären Flächen auf diese verteilt werden. Weist beispielsweise ein Plattenwärmetauscher ein Verhältnis von sekundären zu primären Flächen von 2:1 auf, so kann im Rahmen des Schichtmodells doppelt soviel Wärme über die in dem Metallblock liegende(n) Fläche(n) als über die Fläche(n) in der/den Kontaktebene(n) eingebracht werden.

Vorzugsweise wird der Flächeninhalt der ersten und der zweiten Fläche mit einem Flächenkorrekturfaktor multipliziert. Auf diese Weise kann die Gesamtfläche, über die Wärme in das Schichtmodell eingebracht wird, an die Gesamtfläche, über die Wärme in dem Plattenwärmetauscher eingebracht wird, angepasst werden.

Ist der Wärmeübergangskoeffizient bereits durch die Anzahl der fiktiven Flächen in dem Metallblock geteilt worden oder anders angepasst, so kann die Summe der Flächen der fiktiven Ebenen der Summe aus primären und sekundären Flächen des realen Profils gleichgesetzt werden. Es ist sinnvoll diese Anpassung auf die oben erwähnten Elementarzellen zu beziehen.

Ist der Wärmeübergangskoeffizient noch nicht angepasst worden, so kann auch über die Flächen der fiktiven Ebenen der Gesamtwärmeeintrag angepasst werden, indem die Fläche einer fiktiven Ebene innerhalb einer Elementarzelle der Summe aus primären und sekundären Flächen des realen Profils geteilt durch die Anzahl der fiktiven Ebenen gleichgesetzt wird.

In dem oben begonnenen Beispiel würde also jeder fiktiven Fläche ein Flächeninhalt, welcher der Summe aus primären und sekundären Flächen des realen Profils geteilt durch vier bzw. eine höhere Zahl entspricht, zugewiesen werden.

Bei einem realen Plattenwärmetauscher wird nur ein Teil des Raumes zwischen den Trennblechen von dem Profil eingenommen. Also kann auch nur in einem Teil dieses Raumes eine Wärmeleitung durch das Profil stattfinden. Der Metallblock in dem Schichtmodell nimmt jedoch den gesamten Raum zwischen den Trennblechen ein. Daher ist es bevorzugt, den Wärmeleitungskoeffizienten des Metallblocks mit einem Wärmeleitungskorrekturfaktor zu multiplizieren.

Der Wärmeleitungskorrekturfaktor berücksichtigt, dass eine Wärmeleitung von dem Profil in die Trennbleche nur innerhalb der räumlichen Ausdehnung des Profils geschieht und nicht außerhalb desselben. Der Wärmeleitungskorrekturfaktor kann also etwa dem Verhältnis aus dem nicht durch das Profil ausgefüllten Raum und dem durch das Profil ausgefüllten Raum genähert entsprechen.

Typischerweise weist das Profil zwischen zwei Trennblechen eine sich wiederholende Struktur mit der Wiederholungslänge a auf (s. Figur 4). Innerhalb dieser Wiederholungslänge weist das Profil dabei häufig zwei als Wände ausgebildete Streben zwischen den Trennblechen auf. Diese Wände haben die Stärke b. Es bietet sich an, pro Wiederholungslänge a eine der oben erwähnten Elementarzellen zu betrachten.

Der Metallblock des Schichtmodells weist im Vergleich zu dem Profil eine viel höhere Wärmekapazität auf. Auch hier liegt der Grund darin, dass der Metallblock den gesamten Raum zwischen den Trennblechen ausfüllt, während das Profil nur einen Teil dieses Raumes einnimmt. Vorzugsweise wird daher die Wärmekapazität oder die Dichte des Metallblocks mit einem Kapazitätskorrekturfaktor multipliziert.

Besonders bevorzugt ist es, wenn dieser Kapazitätskorrekturfaktor dem Verhältnis von dem nicht durch das Profil eingenommenen Raum und dem durch das Profil eingenommenen Raum entspricht.

Es kann die Wärmekapazität selbst, die spezifische Wärmekapazität oder die Dichte des Metallblocks mit dem Kapazitätskorrekturfaktor multipliziert werden, da diese Größen proportional zueinander sind.

Basierend auf dem Schichtmodell kann die Temperaturverteilung simuliert werden. Somit steht ein Verfahren zur Verfügung, welches mit einem wenig komplexen Modell die Berechnung der räumlichen Temperaturverteilung in einem Plattenwärmetauscher ermöglicht.

Basierend auf der durch das Schichtmodell bestimmten Temperaturverteilung und dem Elastizitätsmodul kann auch die Spannungsverteilung in dem Schichtmodell berechnet werden und so auf die Spannungsverteilung in dem realen Plattenwärmetauscher geschlossen werden.

Die Spannungsverteilung ergibt sich daraus, dass die in den Metallblock bzw. in die Trennbleche eingebrachte Wärme zu einer reinen Volumenänderung des Metallblocks bzw. der Trennbleche führen würde, wenn dem nicht die vorgegebenen Geometrie bzw. der Konstruktion entsprechende Zwänge entgegenstehen würde. Anstatt bzw. ergänzend zu Volumenänderungen treten daher temperaturabhängige Spannungsänderungen auf. Ist die Temperaturverteilung erst einmal bekannt, können diese berechnet werden.

Die Kenntnis der Spannungsverteilung in einem Plattenwärmetauscher ist besonders wertvoll, da durch ungünstige Spannungsverhältnisse Plattenwärmetauscher zerstört oder in ihrer Lebensdauer herabgesetzt werden können. Die Kenntnis solcher Schwachstellen kann sowohl bei bereits existierenden Plattenwärmetauschern von Vorteil sein, um etwa diese Schwachstellen zu verstärken oder um die Lebensdauer des entsprechenden Plattenwärmetauschers abschätzen zu können, als auch für die Entwicklung bzw. Produktion von Plattenwärmetauschern von Vorteil sein.

Ganz in dem Sinne, das verwendete Schichtmodell wenig komplex zu gestalten, wird vorzugsweise das Elastizitätsmodul des Metallblocks isotrop gewählt. Somit entspricht das Elastizitätsmodul für den Metallblock lediglich einer Zahl obwohl die reale Struktur der Profile orthotrop oder anisotrop ist. Alternativ zu einem solchen isotropen Modell kann auch ein anisotropes oder insbesondere orthotropes Modell verwendet werden.

Zur Berechnung der Spannungsverteilung in dem Schichtmodell wird zunächst die Steifigkeit des Metallblocks festgelegt. Der Metallblock des Schichtmodells ist viel steifer als das Profil des Plattenwärmetauschers. Der Grund dafür liegt auch hier darin, dass das Profil in dem realen Plattenwärmetauscher nicht massiv ist und nicht den gesamten Raum zwischen den Trennblechen einnimmt.

Daher ist es bevorzugt, das Elastizitätsmodul des Metallblocks zur Korrektur der Steifigkeit des Metallblocks mit einem Steifigkeitskorrekturfaktor zu multiplizieren. Besonders bevorzugt ist es, wenn der Steifigkeitskorrekturfaktor das Verhältnis aus dem nicht durch das Profil eingenommenen Raum und dem von dem Profil eingenommenen Raum zwischen den Trennblechen widerspiegelt.

Üblicherweise werden die Fluide mit einem gewissen Druck in den Plattenwärmetauscher eingebracht, so dass dieser Druck mit den thermisch bedingten Spannungen zusammenwirkt. Daher ist es bevorzugt, wenn bei dem hier beschriebenen Verfahren zur Ermittlung einer Gesamtspannungsverteilung der Betriebsdruck der thermisch bedingten Spannungsverteilung überlagert wird. Den anhand des Schichtmodells bestimmten Spannungswerten der thermisch bedingten Spannungsverteilung wird also die Druckverteilung überlagert, um eine Gesamtspannungsverteilung zu bilden.

Bedingt durch die Konstruktion und Montage des Plattenwärmetauschers entstehen zusätzliche Spannungen zu solchen, die durch eine inhomogene Temperaturverteilung bedingt sind. Diese konstruktionsbedingten Spannungen werden hier Einspannrandbedingungen genannt. Vorzugsweise werden diese Einspannrandbedingungen den aus dem Schichtmodell bestimmten thermisch bedingten Spannungswerten überlagert.

Ist das Elastizitätsmodul des Metallblocks mit dem Steifigkeitskorrekturfaktor multipliziert worden, so ist es bevorzugt, die Werte der Spannungsverteilung mit einem Elastizitätsmodulkorrekturfaktor zu multiplizieren. Ist das Elastizitätsmodul mit dem Steifigkeitskorrekturfaktor multipliziert worden, so werden nämlich die Spannungen entsprechend zu klein berechnet. Anstatt die Spannungen mit dem Korrekturfaktor zu multiplizieren, kann man diesen Faktor auch bei einer Bewertung anhand von Vergleichsspannungen mit berücksichtigen und die Vergleichsspannungen entsprechend herabsetzen.

Ein Vergleich mit den Ergebnissen detaillierter Simulationen, welche nicht anhand des Schichtmodells durchgeführt worden sind, sondern die reale Geometrie eines Plattenwärmetauschers soweit wie möglich berücksichtigten, führte zu dem Ergebnis, dass die anhand des Schichtmodells bestimmten Spannungen zu klein bestimmt sind. Daher werden die anhand des Schichtmodells bestimmten Spannungen mit einem Spannungserhöhungsfaktor von vorzugsweise 1,3 bis 2,8 multipliziert. Alternativ kann man auch Vergleichsspannungen zur Bewertung der Spannungsverteilung entsprechend verringern.

Das Metall des Metallblocks ist zum Beispiel Aluminium oder Stahl.

Die vorstehende und die nachfolgende Beschreibung der einzelnen Merkmale bezieht sich auf das Verfahren zur Simulation eines Plattenwärmetauschers, auf das Verfahren zur Herstellung eines Plattenwärmetauschers und auf das Computerprogrammprodukt mit einem Programm zur Durchführung einer Simulation eines Plattenwärmetauschers. Dies gilt auch, ohne dass es im Einzelnen noch explizit erwähnt wird.

### Kurze Beschreibung der Zeichnungen

Im Folgenden wird die Erfindung anhand von Ausführungsbeispielen näher beschrieben, wobei die einzelnen Merkmale auch in anderen Kombinationen erfindungswesentlich sein können. In dem Ausführungsbeispiel besteht der Plattenwärmetauscher aus einem einzigen Wärmetauscherblock.
- Figur 1: zeigt schematisch und perspektivisch einen Plattenwärmetauscher von außen mit einigen Anbauten.
- Figur 2: zeigt den Plattenwärmetauscher aus Figur 1 mit einem teilweise weggelassenen Abdeckblech ohne die Anbauten.
- Figur 3: zeigt schematisch und perspektivisch eine Passage aus dem Plattenwärmetauscher der Figuren 1 und 2.
- Figur 4: zeigt einen Ausschnitt aus einem Wärmeaustauschprofil der Passage aus Figur 3.
- Figur 5: zeigt eine auf wesentliche Aspekte reduzierte Schemazeichnung des Wärmeaustauschprofils aus Figur 4.

### Bevorzugte Ausführung der Erfindung

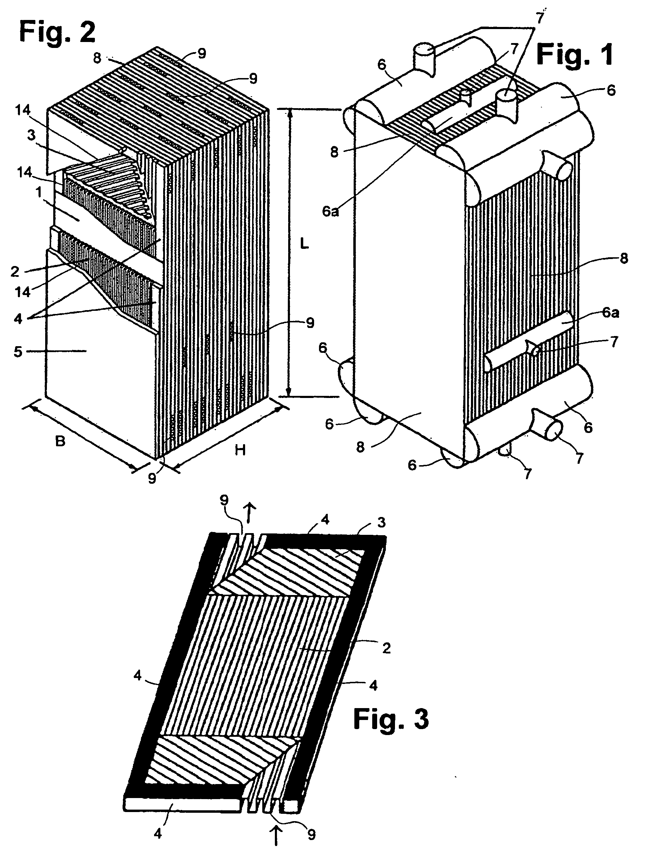

Figur 1 zeigt einen Plattenwärmetauscher von außen. Der Plattenwärmetauscher weist einen zentralen Quader 8 mit einer Länge L von 6 m und einer Breite bzw. Höhe B, H von jeweils 1,2 m auf. Oben auf dem Quader 8, an dessen Seiten und unterhalb des Quaders 8 erkennt man Aufsätze 6 und 6a. Unterhalb des Quaders 8 und auf der der abgebildeten Seite abgewandten Seite befinden sich auch solche Aufsätze 6 und 6a. Diese sind jedoch teilweise verdeckt. Durch Stutzen 7 kann dem Plattenwärmetauscher ein Fluid, hier Wasser, zugeführt bzw. diesem wieder entnommen werden. Die Aufsätze 6 und 6a dienen zur Verteilung des durch die Stutzen 7 eingebrachten Wassers bzw. zum Sammeln und zur Konzentration des aus dem Plattenwärmetauscher zu entnehmenden Wassers. Innerhalb des Plattenwärmetauschers tauschen dann die verschiedenen Wasserströme Wärmeenergie aus.

Der in Figur 1 gezeigte Plattenwärmetauscher ist dazu ausgelegt, mehr als zwei Wasserströme in getrennten Passagen zum Wärmeaustausch aneinander vorbeizuführen. Ein Teil der Ströme kann gegensinnig aneinander vorbeigeführt werden, ein anderer Teil über Kreuz. Zur Erläuterung der Erfindung wird die vereinfachte Situation betrachtet, dass zwei Wasserströme in getrennten sich abwechselnden Passagen aneinander vorbeiströmen. Größere Zahlen von Wasserströmen werfen keine zusätzlichen qualitativen Fragen auf.

In Figur 2 kann man erkennen, wie der Plattenwärmetauscher im Inneren aufgebaut ist. Im Wesentlichen handelt es sich um einen Quader 8 aus Trennblechen 1 und Wärmeaustauschprofilen 2, so genannten Fins 2, bzw. Verteilerprofilen 3. Trennbleche 1 und Profile 2 bzw. 3 aufweisende Schichten wechseln sich ab. Eine ein Wärmeaustauschprofil 2 und Verteilerprofile 3 aufweisende Schicht wird Passage 14 genannt (eine solche Passage ist in Figur 3 gezeigt und wird unten beschrieben).

Der Quader 8 weist also abwechselnd parallel zu den Strömungsrichtungen liegende Passagen 14 und Trennbleche 1 auf. Sowohl die Trennbleche 1 als auch die Passagen 14 sind aus Aluminium gefertigt. Zu ihren Seiten sind die Passagen 14 durch Balken 4 aus Aluminium abgeschlossen, so dass durch die Stapelbauweise mit den Trennblechen 1 eine Seitenwand ausgebildet ist. Die außen liegenden Passagen 14 des Quaders 8 sind durch eine parallel zu den Passagen und den Trennblechen 1 liegende Abdeckung 5 aus Aluminium verdeckt.

Der Quader 8 ist hergestellt worden durch Aufbringen eines Lots auf die Flächen der Trennbleche 1 und anschließendes abwechselndes Aufeinanderstapeln der Trennbleche 1 und der Passagen 14. Die Abdeckungen 5 decken den Stapel 8 nach oben oder unten ab. Anschließend ist der Stapel 8 durch Erhitzen in einem den Stapel 8 umfassenden Ofen verlötet worden.

An den Seiten des Plattenwärmetauschers weisen die Verteilerprofile 3 Verteilerprofilzugänge 9 auf. Durch diese kann von außen das Wasser in die zugehörigen Passagen 14 über die Aufsätze 6 und 6a und Stutzen 7 eingebracht bzw. auch wieder entnommen werden. Die in Figur 2 gezeigten Verteilerprofilzugänge 9 werden in Figur 1 durch die Aufsätze 6 bzw. 6a verdeckt.

Figur 3 zeigt eine der Passagen 14 des in den Figuren 1 und 2 gezeigten Plattenwärmetauschers. Die Strömungsrichtung des Wassers ist durch Pfeile gekennzeichnet. An dem einen Verteilerprofilzugang 9 strömt das Wasser ein, um in dem zugehörigen Verteilerprofil 3 auf die gesamte Breite der Passage 14 verteilt zu werden. Anschließend strömt das Wasser durch das Wärmeaustauschprofil 2 und wird nach erfolgtem Wärmeaustausch von dem anderen Verteilerprofil 3 auf den ausgangsseitigen Verteilerprofilzugang 9 konzentriert. An ihren langen und kurzen Seiten ist die Passage 14 eingegrenzt durch die Balken 4.

Um Verwirbelungen des Wassers zu fördern und damit den Wärmeübergang zu begünstigen, sind in die Wärmeaustauschprofile 2 in dem Beispiel als geschnittene Profile (serrated fins) ausgebildet.

Abhängig von den durch die während des Betriebes durch den Plattenwärmetauscher fließenden Wärmeströme erzeugten Temperaturen vollziehen die Trennbleche 1 und die Profile 2 bzw. 3 thermische Ausdehnungsänderungen. Dies kann zu Spannungen führen, welche den Plattenwärmetauscher beschädigen können.

Durch Simulation der auf diesen Wärmeströmungen basierenden Temperaturverteilung in dem Plattenwärmetauscher wird die Spannungsverteilung bestimmt. Basierend auf diesen simulierten Spannungsverteilungen lassen sich Ausfallrisiken abschätzen oder auch verbesserte Plattenwärmetauscher konstruieren.
Um die Spannungsverteilung in einem Plattenwärmetauscher zu bestimmen, wird zunächst die räumliche Temperaturverteilung (a) anhand eines Schichtmodells bestimmt und aus dieser die Spannungsverteilung (b).

### 1. Näherungsmodell

### 1.1. Schichtmodell und Temperaturverteilung

Aus der Verfahrenstechnik ist es bekannt, die Wassertemperatur und den Wärmeübergangskoeffizienten entlang der Strömungsrichtung parallel zu den Trennblechen 1 mittels Simulation zu bestimmen. Für jede Passage 14 ist also die zweidimensionale simulierte Temperaturverteilung des Wassers parallel zu den Trennblechen bekannt. Dazu ist hier die Software MUSE in Kombination mit MULE der Firma AspenTec verwendet worden. (Stattdessen können auch andere Berechnungswerkzeuge für Plattenwärmetauscher eingesetzt werden.) Basierend auf dieser Temperaturverteilung und dem Wärmeübergangskoeffizienten wird anhand des unten beschriebenen (Figur 5) Modells die Temperaturverteilung im Aluminium des Plattenwärmetauschers bestimmt.

Figur 4 zeigt zunächst schematisch einen Querschnitt durch das Wärmeaustauschprofil aus Figur 3 senkrecht zur Strömungsrichtung, wobei die Passage 14 oben und unten durch die Trennbleche 1 begrenzt ist. Das Wärmeaustauschprofil 2 hat eine Höhe h, hier 1 cm und füllt den Raum zwischen den beiden Trennblechen 1 aus. Die Stärke des Profils 2 ist b, hier 0,5 mm.

Das Wärmeaustauschprofil 2 weist senkrecht zur Strömungsrichtung eine sich wiederholende Struktur mit der Wiederholungslänge a, hier 1,5 cm, auf. Die Trennbleche 1 sind mit dem Wärmeaustauschprofil 2 verlötet, so dass der Kontakt zwischen dem Wärmeaustauschprofil 2 und den Trennblechen 1 eine Wärmeleitfähigkeit aufweist, welche der von grenzflächenfreiem Aluminium gleichgesetzt werden kann.

Das durch dieses Wärmeaustauschprofil 2 strömende Wasser (hier das heiße Wasser) gibt Wärme an das Wärmeaustauschprofil 2 und die Trennbleche 1 ab. Dabei werden die entlang der Vertikalen in den Figuren 4 und 5 ausgerichteten Seitenflächen des Wärmeaustauschprofils 2 als sekundäre Flächen S und die parallel zu den Trennblechen 1 liegenden Flächen als primäre Flächen P bezeichnet.

Das Wasser gibt durch Wärmeübergang Wärme über diese primären und sekundären Flächen an das Wärmeaustauschprofil 2 und die Trennbleche 1 ab.

Hier befinden sich oberhalb und unterhalb dieser Passage (nicht gezeigt) Passagen mit kaltem Wasser. Daher fließt die Wärme nach oben und unten ab.

Die Wärmeübertragung in die sekundären Flächen S erfolgt durch Wärmeübergang in die Wärmeaustauschprofile 2 und über Wärmeleitung darin in die Trennbleche 1. In Figur 4 ist dieser Pfad des Wärmeflusses durch den Buchstaben A bzw. A' bezeichnet.

Zur Vereinfachung wird hier ein Abschnitt der Passage 14 mit einer in diesem Querschnitt lokal homogenen mit MUSE/MULE bestimmten Wassertemperatur betrachtet.

Der Buchstabe B bezeichnet den Wärmeeintrag in die Trennbleche 1 durch Wärmeübergang in diese. Die Profilstärke b ist im Vergleich zur Höhe des Wärmeaustauschprofils klein und der Wärmeübergang zwischen dem Wärmeaustauschprofil 2 und den Trennblechen 1 kann im Kontakt der Wärmeleitfähigkeit von grenzflächenfreiem Aluminium gleichgesetzt werden. Es ist also nicht notwendig, zu unterscheiden, ob der Wärmeübergang direkt von dem Wasser in das Trennblech 1 stattfindet oder ob sich ein an dem Trennblech anliegendes Wärmeaustauschprofil dazwischen befindet.

Möchte man die Temperaturverteilung im Aluminium basierend auf einer Figur 4 entsprechenden Detailtreue bestimmen, so gelangt man schnell an die Leistungsgrenzen der derzeit bekannten Computer. Die Rückführung der Temperaturverteilung auf Wärmeströme durch eine der Figur 4 entsprechenden Geometrie ist so aufwändig, dass eine Temperatur- bzw. Spannungsverteilung für befriedigend große Ausschnitte des Plattenwärmetauschers nicht in einer vertretbaren Zeit bestimmt werden kann.

Figur 5 zeigt ein vereinfachendes Schichtmodell des in Figur 4 gezeigten Ausschnitts des Plattenwärmetauschers.

Die Trennbleche 1 liegen nach wie vor in dem Abstand h parallel zueinander. Der Zwischenraum zwischen den Trennblechen 1 ist nun allerdings nicht durch das Wärmeaustauschprofil 2 aus Figur 4 und Wasser gefüllt, sondern der Zwischenraum wird komplett durch einen fiktiven Aluminiumblock ausgefüllt. Der Aluminiumblock ist direkt an die Trennbleche 1 angelegt, so dass eine zwischen dem Aluminiumblock und den Trennblechen 1 stattfindende Wärmeleitung ungehindert stattfinden kann.

Die Wärme wird über vier fiktive Flächen 10 - 13 in den Aluminiumblock und die Trennbleche 1 eingebracht. Die Flächen 10 und 13 liegen jeweils in Kontakt mit dem Aluminiumblock und den angrenzenden Trennblechen 1. Die Flächen 11 und 12 liegen mittig innerhalb des Aluminiumblockes und direkt aneinander an. Über diese vier Flächen 10 - 13 wird eine dem Wärmeübergang entsprechende Energie in den Aluminiumblock bzw. die Trennbleche 1 eingebracht. Der zuvor bestimmte Wärmeübergangskoeffizient (s. A und B in Figur 4) muss vermindert werden, da hier über mehrere "Quellen" Wärme eingebracht wird. Über die Flächen 11 und 12 wird eine dem Wärmestrom A in Figur 4 entsprechende Wärmemenge eingebracht und über die Flächen 10 und 13 eine dem Wärmestrom B in Figur 4 entsprechende Wärmemenge.

Da die Trennbleche 1 oberhalb und unterhalb des in Figur 5 gezeigten Ausschnitts von kälteren Passagen umgeben sind, fließt hier die Wärme von der oberen Fläche 10 in das obere Trennblech 1 und von der unteren Fläche 13 in das untere Trennblech 1. Aus dem gleichen Grund wird die über die Fläche 11 eingebrachte Wärme über Wärmeleitung durch den Aluminiumblock in Richtung des oberen Trennblechs 1 geleitet; die über die Fläche 12 eingebrachte Wärme wird in Richtung des unteren Trennblechs 1 geleitet.

Um die Wärmeflüsse und damit die Temperaturverteilung in dem Figur 5 entsprechenden Modell soweit wie möglich denen in einer Figur 4 entsprechenden Passage anzupassen, werden noch die Gesamtwechselwirkungsfläche (die gesamte aus den Flächen 10,11,12,13 bestehende Fläche) als geometrische Eigenschaft und weitere thermische Eigenschaften angepasst.

Die Gesamtwechselwirkungsfläche umfasst eine Fläche, welche der Summe aus den Primär- und Sekundärflächen aus Figur 4 entspricht.

Das Schichtmodell aus Figur 5 geht von einem bzgl. seiner thermischen Eigenschaften isotropen Aluminiumblock aus. Würde man die Wärmeleitfähigkeit dieses Aluminiumblocks nicht anpassen, wäre die Wärmeleitfähigkeit von den Flächen 11 und 12 in Richtung der Flächen 10 und 13 viel zu hoch, da nicht berücksichtigt ist, dass bei einem der Figur 4 entsprechenden Wärmeaustauschprofil 2 dieses nur über seine Breite b Wärme in die Trennbleche 1 leiten kann. Um dies zu berücksichtigen, wird der Wärmeleitungskoeffizient des Aluminiumblocks mit einem entsprechenden Korrekturfaktor multipliziert.

Auch die Wärmekapazität des Aluminiumblocks aus Figur 5 ist viel höher als die Wärmekapazität der Wärmeaustauschprofile 2 aus Figur 4. Da die Wärmekapazität proportional zur Dichte eines Materials ist, wird die Dichte des Aluminiumblocks mit einem Dichtekorrekturfaktor multipliziert. Daraus ergibt sich dann eine entsprechend verringerte Wärmekapazität.

Durch die bekannten Wärmeeinträge ist es so möglich, die Temperaturverteilung in dem Aluminiumblock und in den Trennblechen entlang der Passagenhöhe zu berechnen.

### 1.2. Spannungsverteilung

Die Spannungsverteilung wird basierend auf der wie zuvor bestimmten Temperaturverteilung berechnet.

Bei dem in den Figuren 1 und 2 gezeigten Plattenwärmetauscher bzw. der in Figur 3 gezeigten Passage und dem Wärmeaustauschprofil aus Figur 4 handelt es sich um mechanisch orthotrope Systeme. Bei diesen kann man nicht direkt von der Temperatur auf eine temperaturbedingte Spannungsänderung schließen, sondern es muss zunächst die Steifigkeit bestimmt bzw. festgelegt werden.

Zur Festlegung der Steifigkeit wird das Elastizitätsmodul des Aluminiumblocks (Fig. 5) um einen Steifigkeitskorrekturfaktor herabgesetzt. So wird die durch die Geometrie verringerte Steifigkeit des Wärmeaustauschprofils beachtet. Dass das Wärmeaustauschprofil 2 aus Figur 4 bzgl. seiner Steifigkeit anisotrop ist, wird in diesem Ausführungsbeispiel vernachlässigt, um den Rechenaufwand in Grenzen zu halten. Das Elastizitätsmodul ist also in dem gesamten Aluminiumblock eine isotrope Größe. Alternativ könnten anisotrope Eigenschaften berücksichtigt werden.

Basierend auf der Temperaturverteilung, der Steifigkeit des Aluminiumblocks und der Trennbleche 1 und dem wie oben gewählten Elastizitätsmodul kann nun die Spannungsverteilung bestimmt werden.

Die so bestimmten Spannungen sind allerdings zu gering, weil das für den Aluminiumblock festgelegte Elastizitätsmodul zu klein ist. Um dies zu kompensieren, wird die Spannung mit einem Elastizitätsmodulkorrekturfaktor multipliziert. Wahlweise kann man diesen Faktor auch bei der Bewertung der Spannungen mit einfließen lassen und gegebenenfalls vorhandene Bewertungsspannungen herunterskalieren.

Durch einen Vergleich mit den Ergebnissen verschiedener detaillierter Simulationen, welche für einen kleinen zweidimensionalen Ausschnitt in Stromrichtung senkrecht zu den Trennblechen eines Plattenwärmetauschers ausgeführt wurden, wurde festgestellt, dass die Spannungen zu klein bestimmt sind. Daher werden hier die Spannungen noch einmal mit einem Spannungserhöhungsfaktor von beispielsweise 2,6 multipliziert. Gegebenenfalls kann man auch eventuell vorhandene Bewertungsspannungen entsprechend umskalieren.

Die detaillierten Simulationen wurden nicht anhand des in Figur 5 beschriebenen Modells durchgeführt, sondern die Geometrie der Wärmeaustauschprofile 2 wurde der Realität entsprechend wie in Figur 4 modelliert. Der dadurch bedingte Rechenaufwand ist so hoch, dass nur kleine Ausschnitte aus Plattenwärmetauschern berechnet werden können.

Damit sind die thermisch bedingten Spannungen bekannt. Die dreidimensionale Verteilung der Gesamtspannung wird durch Beaufschlagung mit dem Betriebsdruck und Spannungsrandbedingungen (s. unten) bestimmt.

### 2. Beispiel für den Ablauf einer erfindungsgemäßen Simulation:

### 2.1. Erstellen einer Plattenwärmetauschergieometrie

Mittels eines Präprozessorprogrammes (MENTAT) wird aus Konfigurationsdateien eine der später verwendeten Simulationssoftware (MARC) gemäße Darstellung der Plattenwärmetauschergeometrie erstellt. Sowohl MARC als auch MENTAT sind Softwareprodukte der MacNeal-Schwendler Corp. (MSC). Für die Durchführung Simulation im Rahmen der Erfindung können alternativ auch andere Finite-Elemente-Systeme eingesetzt werden.

Ein Plattenwärmetauscher kann mehrere verschiedene Passagentypen aufweisen, welche sich beispielsweise in ihrem Wärmeaustauschprofil (den Fins) unterscheiden können. Eine erste Konfigurationsdatei enthält die Stapelfolge der Passagen. Weitere Konfigurationsdateien enthalten jeweils geometrische Informationen über die Trennbleche 1, Abdeckungen 5, Balken 4 und weitere geometrische Eigenschaften des Plattenwärmetauschers. Passagen können auch in Zonen aufgeteilt sein, in denen beispielsweise ein Medium strömt und Wärme mit benachbarten Passagen ausgetauscht (aktive Zonen) wird oder in denen kein Medium strömt (passive Zonen). Auch diese Zonen können in einer Konfigurationsdatei beschrieben sein.

### 2.2. Erste Anpassungen aufgrund des Schichtmodells

Die Passagen werden jeweils in zwei über einander liegende Abschnitte aufgeteilt. Die Aufteilung entspricht dem Verlauf der inneren Flächen 11, 12.

### 2.3. Erstellen der Aufsätze

Die Aufsätze 6 und 6a werden mit den Passagen verknüpft. Üblicherweise sind diese Aufsätze halbröhrenförmig ausgebildet.

### 2.4. Weitere Modelleigenschaften

Den Teilen des Modells werden in diesem Schritt die verfahrensgemäßen geometrischen, mechanischen und thermischen Eigenschaften zugeschrieben (s. oben). Insbesondere werden die Wärmeaustauschprofile nicht mit ihrer tatsächlichen Geometrie modelliert, sondern durch den oben beschriebenen Aluminiumblock ersetzt.

### 2.5. Einbau der Rand- und Anfangsbedinqungen

Diese umfassen:
- Druck an den Außenflächen aller stromführenden Passagen,
- Druck im Bereich der Aufsätze,
- Stromtemperatur und Wärmeübergangskoeffizient für alle stromführenden Passagen, wie oben beschrieben,
- Spannungsrandbedingungen.

Die Spannungsrandbedingungen (Einspannsituation) können aus der Entwicklung oder Produktion des Plattenwärmetauschers bekannt sein.

Stromtemperatur und Wärmeübergangskoeffizient stehen bevorzugt für aktive Zonen der Passagen zur Verfügung. Für passive Zonen können die entsprechenden Werte konstant fortgeführt bzw. linear interpoliert werden. Alternativ werden Stromtemperatur und Wärmeübergangskoeffizient auch in passiven Zonen verwendet, wenn diese zur Verfügung stehen.

Als Anfangsbedingung der Simulation wird die Temperatur des Aluminiums des Plattenwärmetauschers auf einen bestimmten Wert, zum Beispiel 20°C gesetzt.

Im Rahmen des Schichtmodells können wesentliche Größen, wie der Wärmeübergangskoeffizient oder die Stromtemperatur oder auch der Betriebsdruck, natürlich auch zeitabhängig, vorgegeben werden, so dass transiente Ereignisse modelliert und entsprechende Spannungsverläufe bestimmt werden können.

### 2.6. Verlauf der Berechnungen

Zunächst wird auf Basis der thermischen Randbedingungen und des Simulationsszenarios die Metalltemperaturverteilung bestimmt.

Die Berechnung der Spannungsverteilung setzt auf der Temperaturverteilung auf. Aus Druck, Spannungsrandbedingungen und Temperaturverteilung berechnet das Programm über die Verschiebungsverteilung die Spannungsverteilung. Die Verschiebungsverteilung entspricht der Geometrie des Plattenwärmetauschers mit mechanischen Zwängen.

### 2.7. Bewertung der Spannungen

Mittels dieses Verfahrens kann nun die Spannungsverteilung innerhalb des Plattenwärmetauschers anhand des vereinfachenden Modells simuliert werden. Zur Bewertung dieser Spannungen existieren Vergleichspannungen in Form von Empfehlungen und Vorschriften. Somit besteht nun die Möglichkeit, die Spannungsverteilung eines kompletten Plattenwärmetauschers, und nicht nur Ausschnitte desselben, mit den Vergleichsspannungen zu vergleichen. Auch weitere Bauteile des Plattenwärmetauschers wie zum Beispiel die Aufsätze können in die Simulation der zeitlichen und räumlichen Verteilung der Temperaturspannungen einbezogen werden.

Die Simulation kann verschiedene Betriebsfälle umfassen, beispielsweise den stationären Betrieb, Betrieb unter Sonderbedingungen, Unterlastbetrieb oder allgemein Betriebsfälle unter unterschiedlichen Lastbedingungen, Anfahren oder Abfahren.

## Patentansprüche

1. Verfahren zur Bestimmung der Festigkeit eines Plattenwärmetauschers mit Trennblechen (1) und Profilen (2), bei dem
- die Temperaturspannungen des Plattenwärmetauschers im Inneren des Wärmetauschers während dessen Betriebs mittels einer dreidimensionalen numerischen Simulation berechnet werden und
- auf der Basis der berechneten Temperaturspannungen die Festigkeit des Plattenwärmetauschers bestimmt wird,
wobei bei der dreidimensionalen numerischen Simulation der Temperaturspannungen die räumliche Temperaturverteilung in den Profilen (2) und in den Trennblechen (1) bestimmt wird, indem ein Schichtmodell eines Teiles eines der Profile (2) im Kontakt mit einem der Trennbleche (1) erstellt und verwendet wird, mit den Schritten:
- Modellieren des Profilteiles (2) als ein den Raum zwischen den Trennblechen (1) homogen ausfüllender Metallblock, welcher sich an einer seiner Seiten in einem wärmeleitfähigen Kontakt mit dem Trennblech (1) befindet,
- Bestimmen des über das Fluid vermittelten Gesamtwärmeeintrages in das Profilteil (2) und in das angrenzende Trennblech (1) mit
- einem ersten Wärmeeintrag, nämlich dem Wärmeübergang von dem Fluid in das Profilteil (2) mit anschließender Wärmeleitung durch das Profilteil (2) und von dem Profilteil (2) in das angrenzende Trennblech (1),
- Einbringen einer dem ersten Wärmeeintrag entsprechenden Wärmemenge in eine erste Fläche (11, 12) innerhalb des Metallblocks,
wobei das Verfahren Korrekturfaktoren zur Anpassung des Schichtmodells aufweist.

2. Verfahren nach Anspruch 1, **dadurch gekennzeichnet, dass** bei der Simulation stationäre und instationäre Temperaturspannungen berechnet werden.

3. Verfahren zur Herstellung eines Plattenwärmetauschers mit Trennblechen (1) und Profilen (2) aus Metall, bei dem
- ein oder mehrere mechanische Parameter des Wärmetauschers mittels der Festigkeitsbestimmung gemäß dem Verfahren nach einem der Ansprüche 1 oder 2 festgelegt wird und
- der Wärmetauscher mit dem Parameter beziehungsweise mit den Parametern gefertigt wird.

4. Verfahren zur Herstellung einer verfahrenstechnischen Anlage, die mit mindestens einen Plattenwärmetauscher aufweist, wobei bei dem Verfahren
- der Plattenwärmetauscher gefertigt wird,
- eine Festigkeitsbestimmung gemäß dem Verfahren nach einem der Ansprüche 1 oder 2 durchgeführt wird und
- in Abhängigkeit vom Ergebnis der Festigkeitsbestimmung entschieden wird, ob der Plattenwärmetauscher in der verfahrenstechnischen Anlage eingesetzt wird und/oder die Anlage und/oder deren Betriebsweise wird modifiziert.

5. Verfahren zur Herstellung einer verfahrenstechnischen Anlage die mit mindestens einen Plattenwärmetauscher aufweist, wobei bei dem Verfahren
- in einem ersten Schritt der Plattenwärmetauscher mit konventionellen Mitteln ausgelegt wird,
- in einem zweiten Schritt eine Festigkeitsbestimmung gemäß dem Verfahren nach einem der Ansprüche 1 oder 2 durchgeführt wird,
- in einem dritten Schritt überprüft wird, ob die bestimmte Festigkeit den Anforderungen an die verfahrenstechnische Anlage entspricht, und
- in einem vierten Schritt
- bei positivem Ergebnis des dritten Schritts der Plattenwärmetauscher mit der aktuellen Auslegung gefertigt und für den Einbau in die verfahrenstechnische Anlage vorgesehen wird und
- bei negativem Ergebnis des dritten Schritts der zweite, dritte und vierte Schritt wiederholt werden.

6. Verfahren nach einem der Ansprüche3 bis 5, **dadurch gekennzeichnet, dass** die Fertigung des Wärmetauschers die folgenden Schritte umfasst:
- Aufbringen eines Lots auf die Flächen der Trennbleche (1),
- abwechselndes Aufeinanderstapeln von Trennblechen (1) und Profilen (2),
- Verlöten der Profile (2) mit den Trennblechen (1)

7. Verfahren nach einem der Ansprüche 1 bis 6, **dadurch gekennzeichnet, dass** bei der dreidimensionalen numerischen Simulation der Temperaturspannungen folgende Schritte angewendet werden:
- Bestimmen der Fluidtemperatur und des Wärmeübergangskoeffizienten zwischen einem Fluid und dem Plattenwärmetauscher entlang der Stromrichtung des Fluids,
Bestimmung der räumlichen Temperaturverteilung in den Profilen (2) und in den Trennblechen (1), indem ein Schichtmodell eines Teiles eines der Profile (2) im Kontakt mit einem der Trennbleche (1) erstellt und verwendet wird, mit den Schritten:
- Modellieren des Profilteiles (2) als ein den Raum zwischen den Trennblechen (1) homogen ausfüllender Metallblock, welcher sich an einer seiner Seiten in einem wärmeleitfähigen Kontakt mit dem Trennblech (1) befindet,
- Bestimmen des über das Fluid vermittelten Gesamtwärmeeintrages in das Profilteil (2) und in das angrenzende Trennblech (1) mit einem ersten Wärmeeintrag, nämlich dem Wärmeübergang von dem Fluid in das Profilteil (2) mit anschließender Wärmeleitung durch das Profilteil (2) und von dem Profilteil (2) in das angrenzende Trennblech (1),
- Einbringen einer dem ersten Wärmeeintrag entsprechenden Wärmemenge in eine erste Fläche (11, 12) innerhalb des Metallblocks,
wobei das Verfahren Korrekturfaktoren zur Anpassung des Schichtmodells aufweist.

8. Verfahren nach einem der Ansprüche 1 bis 7, bei dem der Gesamtwärmeeintrag auf den ersten Wärmeeintrag und auf einen zweiten Wärmeeintrag, nämlich den Wärmeübergang von dem Fluid in das angrenzende Trennblech (1) im Bereich des Profilteils (2), aufgeteilt wird und der weitere Schritt enthalten ist: Einbringen einer dem zweiten Wärmeeintrag entsprechenden Wärmemenge in eine zweite Fläche (12, 13) in der Kontaktebene zwischen dem Metallblock und dem Trennblech.

9. Verfahren nach einem der Ansprüche 1 bis 8, **dadurch gekennzeichnet, dass** bei dem der Wärmeübergangskoeffizient für den Wärmeübergang zwischen dem Fluid und dem Plattenwärmetauscher mit einem den Wärmeeintrag korrigierenden Wärmeübergangskorrekturfaktor multipliziert wird.

10. Verfahren nach einem der Ansprüche 1 bis 9, bei dem der Flächeninhalt der ersten und zweiten Fläche mit einem Flächenkorrekturfaktor multipliziert wird.

11. Verfahren nach einem der Ansprüche 1 bis 10, **dadurch gekennzeichnet**, bei dem der Wärmeleitungskoeffizient des Metallblocks mit einem seinen homogenen Aufbau berücksichtigenden Wärmeleitungskorrekturfaktor multipliziert wird.

12. Verfahren nach einem der Ansprüche 1 bis 11, **dadurch gekennzeichnet**, bei dem die Wärmekapazität oder die Dichte des Metallblocks mit einem Kapazitätskorrekturfaktor multipliziert wird.

13. Verfahren nach einem der Ansprüche 1 bis 12, mit dem zusätzlichen Schritt: Ermitteln der räumlichen Spannungsverteilung in den Profilen und in den Trennblechen auf Basis der in dem Schichtmodell bestimmten Temperaturverteilung und des Elastizitätsmodules des Metallblockes und der Trennbleche (1).

## Claims

1. Method for determining the strength of a plate-type heat exchanger having metal separating sheets (1) and profiles (2), in which
- the temperature stresses in the plate-type heat exchanger in the interior of the heat exchanger during its operation are calculated by means of a three-dimensional numerical simulation, and
- the strength of the plate-type heat exchanger is determined on the basis of the calculated temperature stresses, wherein, in the three-dimensional, numerical simulation of the temperature stresses, the three-dimensional temperature distribution in the profiles (2) and in the metal separating sheets (1) is determined by creating and using a layer model of a part of one of the profiles (2) in contact with one of the metal separating sheets (1), having the following steps:
- modelling of the profile part (2) as a metal block which homogeneously fills the space between the metal separating sheets (1) and makes thermally conductive contact with the metal separating sheet (1) on one of its sides,
- determination of the total amount of heat introduced via the fluid into the profile part (2) and into the adjacent metal separating sheet (1), with
- a first amount of heat being introduced, specifically the heat transfer from the fluid into the profile part (2) with subsequent thermal conduction through the profile part (2) and from the profile part (2) into the adjacent metal separating sheet (1),
- introduction of an amount of heat, which corresponds to the first amount of heat introduced, into a first surface (11, 12) within the metal block,
with the method having correction factors for adaptation of the layer model.

2. Method according to Claim 1, **characterized in that** stationary and non-stationary temperature stresses are calculated during the simulation.

3. Method for production of a plate-type heat exchanger having metal separating sheets (1) and profiles (2) composed of metal, in which
- one or more mechanical parameters of the heat exchanger is or are defined by means of the strength determination using the method according to one of Claims 1 or 2, and
- the heat exchanger is manufactured using the parameter or using the parameters.

4. Method for production of a process installation which has at least one plate-type heat exchanger, where, in the case of the method,
- the plate-type heat exchanger is manufactured,
- a strength determination is carried out using the method according to one of Claims 1 or 2, and
- a decision is made as a function of the result of the strength determination as to whether the plate-type heat exchanger will be used in the process installation, and/or whether the installation and/or its method of operation will be modified.

5. Method for production of a process installation which has at least one plate-type heat exchanger, where, in the case of the method,
- in a first step, the plate-type heat exchanger is designed with conventional means,
- in a second step, a strength determination is carried out using the method according to one of Claims 1 or 2,
- in a third step, a check is carried out to determine whether the determined strength complies with the requirements for the process installation, and
- in a fourth step
- if the result of the third step is positive, the plate-type heat exchanger is manufactured with the current design and is provided for fitting in the process installation, and
- if the result of the third step is negative, the second, third and fourth steps are repeated.

6. Method according to one of Claims 3 to 5, **characterized in that** the manufacture of the heat exchanger comprises the following steps:
- application of a solder to the surfaces of the metal separating sheets (1),
- alternate stacking of metal separating sheets (1) and profiles (2) one on top of the other,
- soldering of the profiles (2) to the metal separating sheets (1).

7. Method according to one of Claims 1 to 6, **characterized in that** the following steps are used in the three-dimensional numerical simulation of the temperature stresses:
- determination of the fluid temperature and of the heat transfer coefficient between a fluid and the plate-type heat exchanger along the flow direction of the fluid,
- determination of the three-dimensional temperature distribution in the profiles (2) and in the metal separating sheets (1) by creating and using a layer model of a part of one of the profiles (2) in contact with one of the metal separating sheets (1), having the following steps:
- modelling of the profile part (2) as a metal block which homogeneously fills the space between the metal separating sheets (1) and makes thermally conductive contact with the metal separating sheet (1) on one of its sides,
- determination of the total amount of heat introduced via the fluid into the profile part (2) and into the adjacent metal separating sheet (1), with a first amount of heat being introduced, specifically the heat transfer from the fluid into the profile part (2) with subsequent thermal conduction through the profile part (2) and from the profile part (2) into the adjacent metal separating sheet (1),
- introduction of an amount of heat, which corresponds to the first amount of heat introduced, into a first surface (11, 12) within the metal block,
with the method having correction factors for adaptation of the layer model.

8. Method according to one of Claims 1 to 7, in which the total amount of heat introduced is split into the first amount of heat introduced and a second amount of heat introduced, specifically the heat transfer from the fluid into the adjacent metal separating sheet (1) in the area of the profile part (2), and the following further step is included: introduction of an amount of heat, which corresponds to the second amount of heat introduced, into a second surface (12, 13) on the contact plane between the metal block and the metal separating sheet.

9. Method according to one of Claims 1 to 8, **characterized in that** the heat transfer coefficient for the heat transfer between the fluid and the plate-type heat exchanger is multiplied by a heat transfer correction factor which corrects the amount of heat introduced.

10. Method according to one of Claims 1 to 9, in which the area content of the first and second area is multiplied by an area correction factor.

11. Method according to one of Claims 1 to 10, **characterized in that** the thermal conduction coefficient of the metal block is multiplied by a thermal conduction correction factor which takes account of its homogeneous structure.

12. Method according to one of Claims 1 to 11, **characterized in that** the heat capacity or the density of the metal block is multiplied by a capacity correction factor.

13. Method according to one of Claims 1 to 12, having the following additional step:
determination of the three-dimensional stress distribution in the profiles and in the metal separating sheets on the basis of the temperature distribution determined in the layer model, and on the basis of the modulus of elasticity of the metal block and of the metal separating sheets (1).

## Revendications

1. Procédé de détermination de la résistance mécanique d'un échangeur de chaleur à plaques avec des tôles de séparation (1) et des profilés (2), dans lequel :
les contraintes de température de l'échangeur de chaleur à plaques à l'intérieur de l'échangeur de chaleur sont calculées pendant son fonctionnement au moyen d'une simulation numérique tridimensionnelle et
dans lequel on détermine la résistance mécanique de l'échangeur de chaleur à plaques sur base des contraintes de température calculées,
dans lequel, dans la simulation numérique tridimensionnelle des contraintes de température, on détermine la répartition spatiale des températures dans les profilés (2) et les tôles de séparation (1) en établissant et en utilisant un modèle stratifié d'une partie d'un des profilés (2) en contact avec l'une des tôles de séparation (1), avec les étapes qui consistent à :
modéliser la pièce profilée (2) comme bloc métallique qui remplit de manière homogène l'espace compris entre les tôles de séparation (1) et dont un des côtés est en contact thermiquement conducteur avec la tôle de séparation (1),
déterminer l'apport global de chaleur par le fluide dans la pièce profilée (2) et dans la tôle de séparation (1) adjacente, avec
un premier apport de chaleur qui est le transfert de chaleur depuis le fluide jusque dans la pièce profilée (2) avec ensuite conduction thermique à travers le profilé (2) et du profilé (2) à la tôle de séparation (1) adjacente,
apport d'une quantité de chaleur qui correspond au premier apport de chaleur dans une première surface (11, 12) située à l'intérieur du bloc métallique,
le procédé présentant des facteurs de correction qui permettent d'adapter le modèle stratifié.

2. Procédé selon la revendication 1, **caractérisé en ce que** dans la simulation, on calcule les contraintes stationnaires et les contraintes non stationnaires de température.

3. Procédé de fabrication d'un échangeur de chaleur à plaques, qui présente des tôles de séparation (1) et des profilés (2) en métal, dans lequel :
un ou plusieurs paramètres mécaniques de l'échangeur à plaques sont définis au moyen de la détermination de la résistance mécanique réalisée à l'aide du procédé selon l'une des revendications 1 ou 2 et
dans lequel l'échangeur de chaleur est fabriqué avec le paramètre ou les paramètres.

4. Procédé de fabrication d'une installation technique de traitement qui présente au moins un échangeur de chaleur à plaques, procédé dans lequel :
l'échangeur de chaleur à plaques est fabriqué,
une détermination de sa résistance mécanique est réalisée à l'aide du procédé selon l'une des revendications 1 ou 2 et
en fonction du résultat de la détermination de la résistance mécanique, on décide si l'échangeur de chaleur à plaques peut être utilisé dans l'installation technique de traitement et/ou on modifie l'installation et/ou son mode de fonctionnement.

5. Procédé de fabrication d'une installation technique de traitement qui présente au moins un échangeur de chaleur à plaques, et dans lequel :
dans une première étape, on conçoit l'échangeur de chaleur à plaques à l'aide de moyens classiques,
dans une deuxième étape, on réalise une détermination de sa résistance mécanique à l'aide du procédé selon l'une des revendications 1 ou 2,
dans une troisième étape, on vérifie si la résistance mécanique déterminée correspond aux exigences imposées à l'installation technique de traitement et
dans une quatrième étape,
si le résultat de la troisième étape est positif, l'échangeur de chaleur à plaques est fabriqué dans sa conception en cours et est prévu pour être incorporé dans l'installation technique de traitement et
si le résultat de la troisième étape est négatif, on répète la deuxième, la troisième et la quatrième étape.

6. Procédé selon l'une des revendications 3 à 5, **caractérisé en ce que** la fabrication de l'échangeur de chaleur comprend les étapes suivantes :
application d'une brasure sur les surfaces des tôles de séparation (1),
empilement alterné des tôles de séparation (1) et des profilés (2),
brasage des profilés (2) sur les tôles de séparation (1).

7. Procédé selon l'une des revendications 1 à 6, **caractérisé en ce que** dans la simulation numérique tridimensionnelle des contraintes de température, on applique les étapes suivantes :
détermination de la température du fluide et du coefficient de transmission thermique entre un fluide et l'échangeur de chaleur à plaques dans la direction d'écoulement du fluide,
détermination de la répartition spatiale de température dans les profilés (2) et dans les tôles de séparation (1) en établissant et en utilisant un modèle stratifié d'une partie de l'un des profilés (2) en contact avec l'une des tôles de séparation (1), avec les étapes qui consistent à :
modéliser la pièce profilée (2) comme bloc métallique qui remplit de manière homogène l'espace compris entre les tôles de séparation (1) et dont un des côtés est en contact thermiquement conducteur avec la tôle de séparation (1),
déterminer l'apport global de chaleur par le fluide dans la pièce profilée (2) et dans la tôle de séparation (1) adjacente, avec un premier apport de chaleur qui est le transfert de chaleur depuis le fluide jusque dans la pièce profilée (2) avec ensuite conduction thermique à travers le profilé (2) et du profilé (2) à la tôle de séparation (1) adjacente,
apport d'une quantité de chaleur qui correspond au premier apport de chaleur dans une première surface (11, 12) située à l'intérieur du bloc métallique,
le procédé présentant des facteurs de correction qui permettent d'adapter le modèle stratifié.

8. Procédé selon l'une des revendications 1 à 7, dans lequel l'apport global de chaleur est réparti entre le premier apport de chaleur et un deuxième apport de chaleur, à savoir le transfert de chaleur du fluide à la tôle de séparation (1) adjacente dans la zone occupée par la pièce profilée (2), et qui comprend l'étape supplémentaire qui consiste à apporter une quantité de chaleur qui correspond au deuxième apport de chaleur dans une deuxième surface (12, 13) située sur le plan de contact entre le bloc métallique et la tôle de séparation.

9. Procédé selon l'une des revendications 1 à 8, **caractérisé en ce que** le coefficient de transfert thermique pour le transfert thermique entre le fluide et l'échangeur de chaleur à plaques est multiplié par un facteur de correction de transfert thermique qui corrige l'apport de chaleur.

10. Procédé selon l'une des revendications 1 à 9, dans lequel on multiplie la superficie de la première et de la deuxième surface par un facteur de correction de surface.

11. Procédé selon l'une des revendications 1 à 10, **caractérisé en ce que** le coefficient de conductivité thermique du bloc métallique est multiplié par un facteur de correction de conductivité thermique qui tient compte de sa structure homogène.

12. Procédé selon l'une des revendications 1 à 11, **caractérisé en ce que** la capacité calorifique ou la densité du bloc métallique sont multipliées par un facteur de correction de capacité.

13. Procédé selon l'une des revendications 1 à 12, qui présente l'étape supplémentaire qui consiste à déterminer la répartition spatiale des contraintes dans les profilés et dans les tôles de séparation à partir de la répartition de température déterminée dans le modèle stratifié et du module d'élasticité du bloc métallique et de la tôle de séparation (1).
